# EUROPEAN PATENT APPLICATION

(11) **EP 2 357 861 A1**
(43) Date of publication of application: **17.08.2011**
(21) Application number: 11001086.5
(22) Date of filing: 10.02.2011
(51) Int. Cl.: H04W 24/10

(54) **Method and communication device for handling system information acquisition of a CSG cell**

(30) Priority: 10.02.2010 US 302971 P; 08.02.2011 US 22637
(71) Applicant: HTC Corporation, Taoyuan County 330 (TW)
(72) Inventor: Wu, Chih-Hsiang, Taoyuan City Taoyuan County 330 (TW)
(74) Representative: Emde, Eric

(57) **Abstract**

A method of handling system information acquisition for a network in a wireless communication system is disclosed. The method includes configuring a measurement gap configuration to a mobile device of the wireless communication system in a CELL_FACH state for the system information acquisition when a proximity indication is received from the mobile device.

## Description

### Background of the Invention

### 1. Field of the Invention

The application relates to a method utilized in a wireless communication system and a communication device thereof, and more particularly, to a method of handling system information acquisition in a wireless communication system and a related communication device.

### 2. Description of the Prior Art

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting at the third generation mobile telecommunication technology, the 3rd Generation Partnership Project (3GPP) provides High Speed Package Access (HSPA) technology, which includes High Speed Downlink Package Access (HSDPA) and High Speed Uplink Package Access (HSUPA), to increase bandwidth utility rate and package data processing efficiency so as to improve uplink/downlink transmission rate.

In a Universal Mobile Telecommunications System (UMTS) system, the Universal Terrestrial Radio Access Network (UTRAN) includes a plurality of base stations (Node Bs) and communicates with a plurality of mobile stations, also referred as user equipments (UEs). In addition, as well known in the art, radio resource control (RRC) states of an UE contain an idle mode and a RRC connected mode including CELL_PCH, URA_PCH, CELL_FACH and CELL_DCH states.

On the basis of HSDPA, the 3GPP launches High Speed Downlink Shared Channel reception in CELL_FACH state, which is abbreviated to HS-DSCH reception in CELL_FACH state. HS-DSCH reception in CELL_FACH state is configured by the UTRAN, and allows an UE monitoring the HS-DSCH for downlink data reception with cooperation of related control channel, namely Shared Control Channel for HS-DSCH (HS-SCCH), so as to improve peak data rate, signaling delay, state transition delay and flexible cell capacity.

Moreover, an UE in the CELL_DCH or CELL_FACH state supporting a closed subscriber group (CSG) feature can transmit proximity indication to a network (i.e. the UTRAN) for triggering inbound mobility (namely handover) to a CSG/hybrid cell when the UE is configured proximity indication reporting by the network. The UE supporting the CSG feature has a CSG whitelist which contains one or more CSG identities associated with CSG cells on which the UE is allowed for access. The CSG cell is associated with a small coverage base station which may be deployed for magnificent advantages, such as the high bandwidth wireless internet access in the home and office, and efficient and cost-effective capacity solution for indoor coverage, whereas the hybrid cell is accessed as a CSG cell by a UE whose CSG whitelist contains a CSG identity of the cell and as a normal cell by all other UEs.

As to an operation of the inbound mobility of the UE in the CELL_DCH state, the proximity indication is sent to the network (i.e. the UTRAN) when the UE in the CELL_DCH state enters proximity of a cell whose CSG identity is in the CSG whitelist of the UE. The UTRAN configures the UE in the CELL_DCH state with compressed mode if needed after the proximity indication is received. Please note that, the compressed mode is the technology for generating idle periods (hereafter called "gaps") for inter-frequency measurement or inter-RAT measurement. Thus, the UE can perform the measurement for the CSG cell during the gaps, and then generates a measurement report to the network for a handover preparation. Moreover, the UTRAN configures the UE with system information acquisition and reporting. The UE in the CELL_DCH state reads system information of the CSG cell by utilizing the gaps, i.e. the UE suspends reception and transmission to acquire the system information of the CSG cell, and then sends a system information report including the CSG identity of the CSG cell to the UTRAN, so that the UTRAN can check whether the CSG cell is allowed for access based on the CSG identity and the CSG whitelist for the UE. In other words, the UTRAN determines whether to handover the UE to the CSG cell according to the measurement report and the system information report, and sends a handover command to the UE when the network decides to handover the UE to the CSG cell.

As abovementioned, the UE in the CELL_DCH uses the gaps to acquire system information of the CSG cell. However, the UMTS system does not clearly specify how the UE in the CELL_FACH state shall handle system information acquisition configured by the UTRAN, thereby impacting the inbound mobility to a CSG/hybrid cell. In addition, several scenarios are described as follows.

In the first scenario, the UE in the CELL_FACH state sends a proximity indication to the UTRAN when entering proximity of a CSG cell. Since it is never considered that how the UE in the CELL_FACH state reads the system information of the CSG cell, when the UTRAN configures the UE to read system information of the CSG cell, the UE reads the system information of the CSG cell by temporarily ignoring some data reception on FACH channel, causing data missing.

In the second scenario, the UE in the CELL_FACH state performs autonomous search for a CSG cell when at least one CSG identity is included in the CSG whitelist of the UE. When the UE detects a suitable CSG cell by the autonomous search, the UE performs system information acquisition for the CSG cell for cell access. However, since it is never considered that how the UE in the CELL_FACH state reads the system information of the CSG cell, the UE reads the system information by temporarily ignoring some data reception on FACH channel, causing data missing.

### Summary of the Invention

The application discloses a method of handling system information acquisition in a wireless communication system and a related communication device in order to solve the abovementioned problems.

A method of handling system information acquisition for a network in a wireless communication system is disclosed. The method comprises configuring a measurement gap configuration to a mobile device of the wireless communication system in a CELL_FACH state for the system information acquisition when a proximity indication is received from the mobile device.

A network of a wireless communication system for handling system information acquisition is disclosed. The network comprises means for receiving a proximity indication from a mobile device of the wireless communication system in a CELL_FACH state, and means for configuring a measurement gap configuration to the mobile device for the system information acquisition when the proximity indication is received.

A method of handling system information acquisition for a mobile device in a wireless communication system is disclosed. The method comprises in a CELL_FACH state, transmitting a proximity indication to a network of the wireless communication system when near a cell whose identity is in a closed subscriber group (CSG) whitelist of the mobile device, being configured to acquire the system information of the cell by the network, and performing the system information acquisition for the cell when a measurement gap configuration is configured by the network.

A mobile device of a wireless communication system for handling system information acquisition is disclosed. The mobile device comprises means for in a CELL_FACH state, transmitting a proximity indication to a network of the wireless communication system when near a cell whose identity is in a closed subscriber group (CSG) whitelist of the mobile device, means for being configured to acquire the system information of the cell by the network, and means for performing the system information acquisition for the cell when a measurement gap configuration is configured by the network.

A method of handling system information acquisition for a mobile device in a wireless communication system is disclosed. The method comprises when at least one closed subscriber group (CSG) identity is included in a CSG whitelist of the mobile device, performing an autonomous search for CSG cell detection in a CELL_FACH state, and when a cell whose identity is included in the CSG whitelist is detected by the autonomous search and a measurement gap configuration is configured by a network of the wireless communication system, performing the system information acquisition for the cell.

A mobile device of a wireless communication system for handling system information acquisition is disclosed. The mobile device comprises means for when at least one closed subscriber group (CSG) identity is included in a CSG whitelist of the mobile device, performing an autonomous search for CSG cell detection in a CELL_FACH state, and means for when a cell whose identity is included in the CSG whitelist is detected by the autonomous search and a measurement gap configuration is configured by a network of the wireless communication system, performing the system information acquisition for the cell.

These and other objectives of the present invention will no doubt become obvious to those of ordinary skill in the art after reading the following detailed description of the preferred embodiment that is illustrated in the various figures and drawings.

### Brief Description of the Drawings

Fig. 1 illustrates a schematic diagram of an exemplary wireless communication system.
Fig. 2 illustrates a schematic diagram of an exemplary communication device.
Fig. 3-5 are flowcharts of exemplary processes.

### Detailed Description

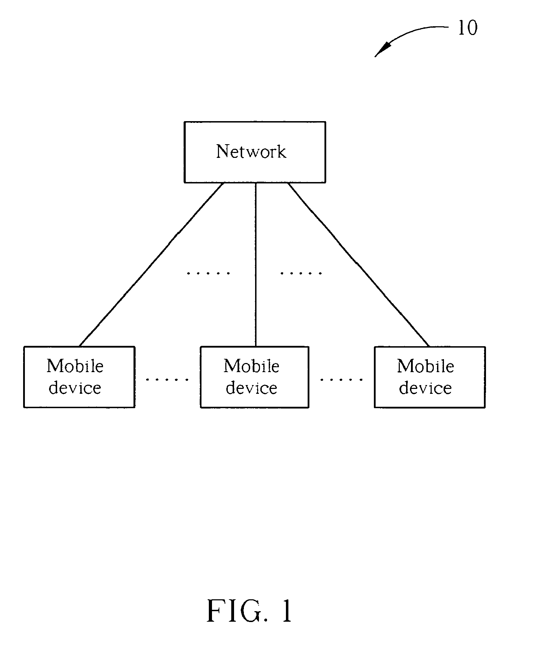

Please refer to Fig. 1, which illustrates a schematic diagram of a wireless communication system 10 according to an example. Briefly, the wireless communication system 10 is composed of a network and a plurality of mobile devices. The wireless communication system 10 can be a UMTS (Universal Mobile Telecommunications System), or any other similar network system. In the UMTS system, the network can be referred as a Universal Terrestrial Radio Access Network (UTRAN) comprising a plurality of base stations (Node Bs) and Radio Network Controllers (RNCs), whereas the mobile devices are referred as to user equipments (UEs). The UEs can be devices such as mobile phones, computer systems, etc. This terminology will be used throughout the application for ease of reference. However, this should not be construed as limiting the disclosure to any one particular type of network. In some examples, the network and the UE may be seen as a transmitter or receiver according to transmission direction, e.g., for uplink (UL), the UE is the transmitter and the network is the receiver, and for downlink (DL), the network is the transmitter and the UE is the receiver.

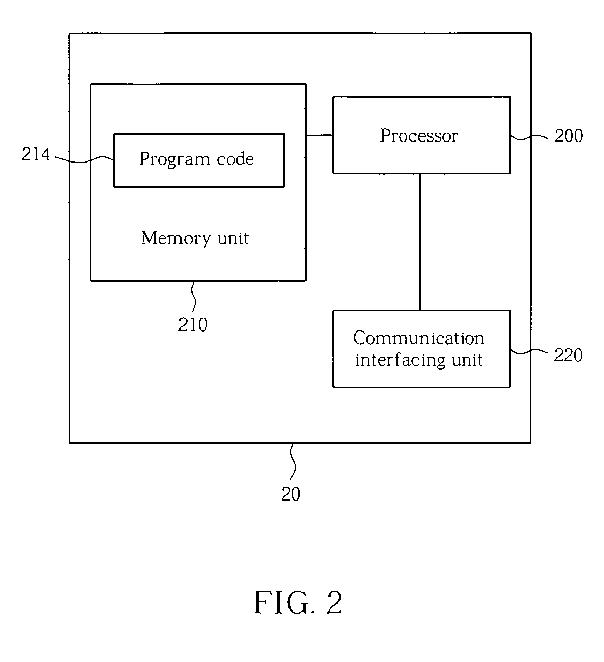

Fig. 2 illustrates a schematic diagram of an exemplary communication device 20. The communication device 20 can be the mobile device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200. The communications device 20 is utilized in a High Speed Package Access (HSPA) system of the third generation (3G) mobile communications system and supports High Speed Downlink Shared Channel reception in CELL_FACH state, which is abbreviated to HS-DSCH reception in CELL_FACH state when the communication device 20 is the mobile device.

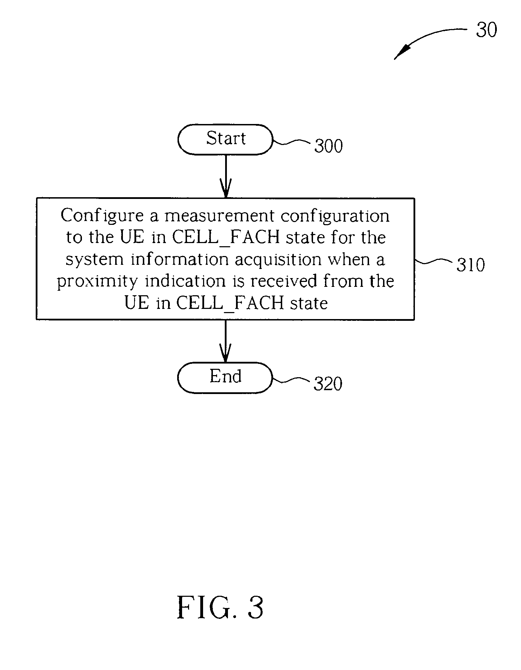

Please refer to Fig. 3, which illustrates a flowchart of an exemplary process 30. The process 30 is utilized in a network, for handling system information acquisition configured to an UE (as a mobile device of Fig. 1) in CELL_FACH state. The UE has a closed subscriber group (CSG) whitelist capable of providing a list of accessible CSG cells, and can transmit a proximity indication to the network when entering proximity of a cell whose identity is in the CSG whitelist. The process 30 can be compiled into the program code 214 and includes the following steps:

| | |
|---|---|
| Step 300: | Start. |
| Step 310: | Configure a measurement gap configuration to the UE in CELL_FACH state for the system information acquisition when a proximity indication is received from the UE in CELL_FACH state. |
| Step 320: | End. |

According to the process 40, the network (i.e. the UTRAN) configures the measurement gap configuration to the UE when receiving the proximity indication from the UE in CELL_FACH state. Therefore, the UE can perform the system information acquisition according to the measurement gap configuration when the network configures the UE to read system information of the cell whose identity is in the CSG whitelist, so as to avoid that the UE reads the system information by temporarily ignoring some data reception on FACH channel, causing data missing.

Please note that, the measurement gap configuration is a FACH measurement occasion (i.e. an opportunity for the UE to perform measurement on FACH channel) or a discontinuous reception (DRX) configuration. DRX functionality allows the UE to monitor signaling only during certain configured periods. An operation of the DRX functionality shall be well known in the art, so it is omitted herein.

Take an example based on the process 30. The UE in the CELL_FACH state transmits a proximity indication to the UTRAN when near a CSG cell whose CSG identity is included in the CSG whitelist of the UE. After the UTRAN receives the proximity indication from the UE, the UTRAN configures the UE to read the system information of the CSG cell, so as to check whether the CSG cell is allowed for access. In addition, the UTRAN configures at least one of FACH measurement occasion and DRX configuration to the UE. Thus, the UE can read the system information of the CSG cell during the FACH measurement occasion or a specific period configured in the DRX configuration. In some embodiments, the UTRAN configures the UE the DRX configuration in the CELL_FACH state when the UE is configured HS-DSCH reception in the CELL_FACH state.

As can be seen, the process 30 clearly specifies how the network (i.e. the UTRAN) handles the UE in the CELL_FACH state to perform the system information acquisition. The UTRAN configures the measurement gap configuration (e.g. the FACH measurement occasion or DRX configuration) to the UE, and thereby the UE reads the system information by using the measurement gap configuration, so as to avoid that the UE reads the system information by ignoring some data reception on the FACH cannel, causing data missing.

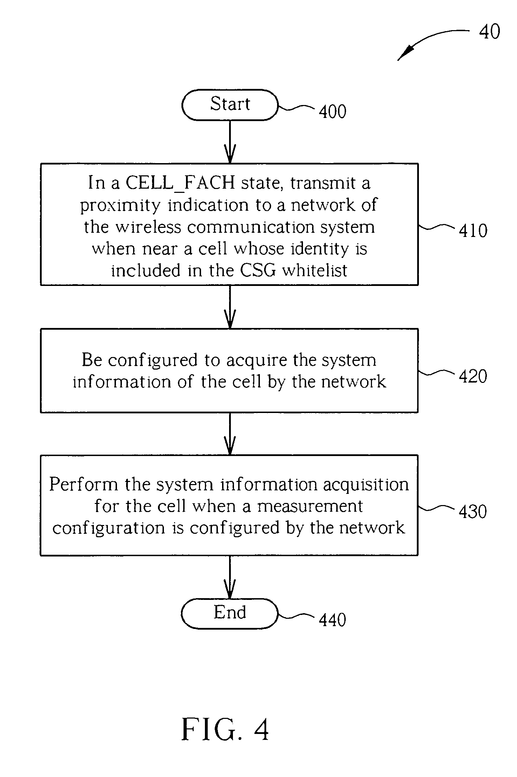

Please refer to Fig. 4, which illustrates a flowchart of an exemplary process 40. The process 40 is utilized in an UE, as the mobile device of Fig. 1, for handling system information acquisition in CELL_FACH. The UE has a closed subscriber group (CSG) whitelist capable of providing a list of accessible CSG cells. The process 40 can be compiled into the program code 214 and includes the following steps:

| | |
|---|---|
| Step 400: | Start. |
| Step 410: | In a CELL_FACH state, transmit a proximity indication to a network of the wireless communication system when near a cell whose identity is included in the CSG whitelist. |
| Step 420: | Be configured to acquire the system information of the cell by the network. |
| Step 430: | Perform the system information acquisition for the cell when a measurement gap configuration is configured by the network. |
| Step 440: | End. |

According to the process 40, when the UE in the CELL_FACH state is configured to read the system information of the CSG cell, the UE reads the system information of the CSG cell only when the measurement gap configuration is configured by the network (i.e. the UTRAN). In other words, the UE is forbidden to read the system information of the CSG cell if the measurement gap configuration is not configured by the UTRAN. In addition, the measurement gap configuration may be the FACH measurement occasion or DRX configuration.

Note that, the system information may include cell information of the proximity cell. The cell information may include at least one of primary synchronization code (PSC), public land mobile network (PLMN) identity, location area code, routing area code, cell identity, CSG identity, CSG member indication and etc.

As abovementioned, the UTRAN configures the UE to acquire the system information of the CSG cell when receiving the proximity indication from the UE. Besides, the UTRAN configures the FACH measurement occasion to the UE for system information acquisition, or the DRX configuration to the UE for system information acquisition when the UE is configured HS-DSCH reception in the CELL_FACH state. Therefore, the UE in the CELL_FACH can read system information of the CSG cell during the FACH measurement occasion or a specific period configured in the DRX configuration, so as to avoid data missing.

The process 40 clearly specifies how the UE reads the system information of the CSG cell in the CELL_FACH state when the system information acquisition is configured by the network.

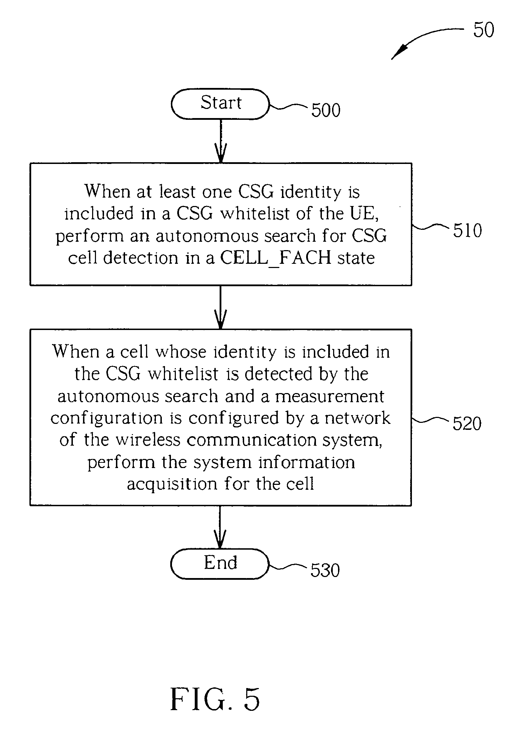

Please refer to Fig. 5, which illustrates a flowchart of an exemplary process 50. The process 50 is utilized in an UE, as the mobile device of Fig. 1, for handling system information acquisition in CELL_FACH. The UE has a closed subscriber group (CSG) whitelist capable of providing a list of accessible CSG cells. The process 50 can be compiled into the program code 214 and includes the following steps:

| | |
|---|---|
| Step 500: | Start. |
| Step 510: | When at least one CSG identity is included in a CSG whitelist of the UE, perform an autonomous search for CSG cell detection in a CELL FACH state. |
| Step 520: | When a cell whose identity is included in the CSG whitelist is detected by the autonomous search and a measurement gap configuration is configured by a network of the wireless communication system, perform the system information acquisition for the cell. |
| Step 530: | End. |

According to the process 50, when the UE in the CELL_FACH state detects a CSG cell by the autonomous search, the system information acquisition of the UE is triggered. The UE reads the system information of the CSG cell only when the measurement gap configuration is configured by the network (i.e. the UTRAN). In other words, the UE is forbidden to read the system information of the CSG cell if the measurement gap configuration is not configured by the UTRAN though the system information acquisition of the UE is triggered, so as to avoid data missing.

Note that, the measurement gap configuration may be the FACH measurement occasion or DRX configuration. Moreover, the system information may include cell information of the proximity cell. The cell information may include at least one of primary synchronization code (PSC), public land mobile network (PLMN) identity, location area code, routing area code, cell identity, CSG identity, CSG member indication and etc.

The process 50 clearly specifies how the UE handles the system information acquisition in the CELL_FACH state when detecting a CSG cell by the autonomous search. The UE reads the system information of the CSG cell only during the FACH measurement occasion or a specific period configured in the DRX configuration configured by the network.

Please note that, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the exemplary examples and means are provided for handling the system information acquisition for the UE in the CELL_FACH state and for the network, so as to avoid data missing.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling system information acquisition for a network in a wireless communication system, the method comprising:
configuring a measurement gap configuration to a mobile device of the wireless communication system in a CELL_FACH state for the system information acquisition when a proximity indication is received from the mobile device.

2. The method of claim 1, wherein the measurement gap configuration is a FACH measurement occasion or a discontinuous reception (DRX) configuration.

3. The method of claim 2, wherein configuring the measurement gap configuration to the mobile device of the wireless communication system in the CELL_FACH state for the system information acquisition when the proximity indication is received from the mobile device comprises:
configuring the DRX configuration to the mobile device in the CELL_FACH state when the mobile device is configured high speed downlink shared channel (HS-DSCH) reception in the CELL_FACH state and the proximity indication is received from the mobile device.

4. A network of a wireless communication system for handling system information acquisition, the network comprising:
means for receiving a proximity indication from a mobile device of the wireless communication system in a CELL_FACH state; and
means for configuring a measurement gap configuration to the mobile device for the system information acquisition when the proximity indication is received.

5. The network of claim 4, wherein the measurement gap configuration is a FACH measurement occasion or a discontinuous reception (DRX) configuration.

6. The network of claim 5, wherein the means for configuring the measurement gap configuration to the mobile device for the system information acquisition when the proximity indication is received comprises:
means for configuring the DRX configuration to the mobile device in the CELL_FACH state when the mobile device is configured high speed downlink shared channel (HS-DSCH) reception in the CELL_FACH state and the proximity indication is received.

7. A method of handling system information acquisition for a mobile device in a wireless communication system, the method comprising:
in a CELL_FACH state, transmitting a proximity indication to a network of the wireless communication system when near a cell whose identity is in a closed subscriber group (CSG) whitelist of the mobile device;
being configured to acquire the system information of the cell by the network; and
performing the system information acquisition for the cell when a measurement gap configuration is configured by the network.

8. The method of claim 7, wherein the measurement gap configuration is a FACH measurement occasion, or is a discontinuous reception (DRX) configuration when high speed downlink shared channel (HS-DSCH) reception in the CELL_FACH state is configured.

9. A mobile device of a wireless communication system for handling system information acquisition, the mobile device comprising:
means for in a CELL_FACH state, transmitting a proximity indication to a network of the wireless communication system when near a cell whose identity is in a closed subscriber group (CSG) whitelist of the mobile device;
means for being configured to acquire the system information of the cell by the network; and
means for performing the system information acquisition for the cell when a measurement gap configuration is configured by the network.

10. The mobile device of claim 9, wherein the measurement gap configuration is a FACH measurement occasion, or is a discontinuous reception (DRX) configuration when high speed downlink shared channel (HS-DSCH) reception in the CELL_FACH state is configured.

11. A method of handling system information acquisition for a mobile device in a wireless communication system, the method comprising:
when at least one closed subscriber group (CSG) identity is included in a CSG whitelist of the mobile device, performing an autonomous search for CSG cell detection in a CELL_FACH state; and
when a cell whose identity is included in the CSG whitelist is detected by the autonomous search and a measurement gap configuration is configured by a network of the wireless communication system, performing the system information acquisition for the cell.

12. The method of claim 11, wherein the measurement gap configuration is a FACH measurement occasion, or is a discontinuous reception (DRX) configuration when high speed downlink shared channel (HS-DSCH) reception in the CELL_FACH state is configured.

13. A mobile device of a wireless communication system for handling system information acquisition, the mobile device comprising:
means for when at least one closed subscriber group (CSG) identity is included in a CSG whitelist of the mobile device, performing an autonomous search for CSG cell detection in a CELL_FACH state; and
means for when a cell whose identity is included in the CSG whitelist is detected by the autonomous search and a measurement gap configuration is configured by a network of the wireless communication system, performing the system information acquisition for the cell.

14. The mobile device of claim 13, wherein the measurement gap configuration is a FACH measurement occasion, or is a discontinuous reception (DRX) configuration when high speed downlink shared channel (HS-DSCH) reception in the CELL_FACH state is configured.
